(19) Europäisches Patentamt
European Patent Office
Office européen des brevets

(11) Publication number: 0 097 979
B1

(12) # EUROPEAN PATENT SPECIFICATION

(45) Date of publication of patent specification: 30.09.87

(51) Int. Cl.[4]: **C 07 D 251/70**, C 08 G 59/62, C 08 G 59/64, C 09 D 3/58

(21) Application number: 83200747.0

(22) Date of filing: 26.05.83

(54) **Amino-triazine derivative, its preparation and its use in heat-curable compositions.**

(30) Priority: **30.06.82 US 393974**

(43) Date of publication of application:
**11.01.84 Bulletin 84/02**

(45) Publication of the grant of the patent:
**30.09.87 Bulletin 87/40**

(84) Designated Contracting States:
**BE CH DE FR GB IT LI NL**

(56) References cited:
**US-A-4 127 377**

(73) Proprietor: **SHELL INTERNATIONALE RESEARCH MAATSCHAPPIJ B.V.**
**Carel van Bylandtlaan 30**
**NL-2596 HR Den Haag (NL)**

(72) Inventor: **Allen, Roy Anthony**
**11850 Westmere Drive**
**Houston Texas 77077 (US)**

(74) Representative: **Aalbers, Onno et al**
**P.O. Box 302**
**NL-2501 CH The Hague (NL)**

**The file contains technical information submitted after the application was filed and not included in this specification**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to an amino-triazine derivative, its preparation, heat-curable compositions containing it, and the use of such compositions in coating articles.

US—A—4,217,377 describes a crosslinking agent for epoxy powder coating compositions which is a low molecular weight adduct of a monohydroxy, single ring aromatic carbon compound and a hexakis (alkoxymethyl) amino-triazine. The adducts described in US—A—4,217,377 retain two of the six theoretical methoxy groups of the original triazine during the preparation, as the methoxy groups are the crosslinking groups of the adduct. During cure of epoxy compositions containing such adducts, methanol is evolved, giving rise to the possibility of void formation due to emission of volatiles during cure. This is a particular problem in rapid cure when thicknesses of 10 to 20 ml (0.25 to 0.5 mm) or even more are involved.

It is an object of this invention to provide an amino-triazine derivative suitable as a curing agent for epoxy resins, which does not give rise to evolution of methanol or similar volatiles during cure.

According to th present invention therefore, there is provided an amino-triazine derivative, suitable as a curing agent for epoxy resins, having general formula (I)

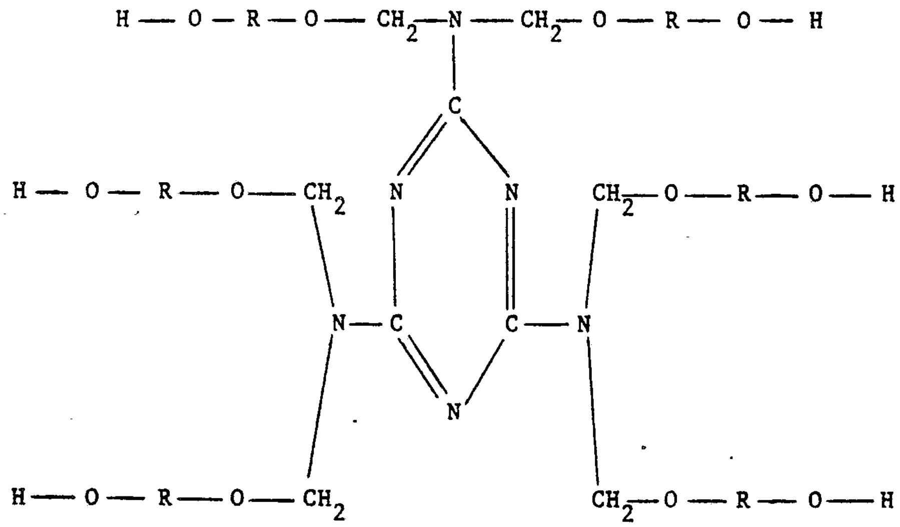

I

wherein R represents the residue

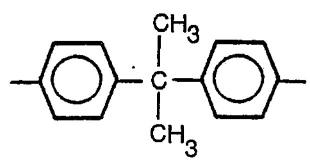

Amino-triazine derivatives of formula (I) are prepared in accordance with the invention by a process which comprises reacting 2.2-bis(4-hydroxyphenyl)propane (BPA) with an amino-triazine having the general formula (II)

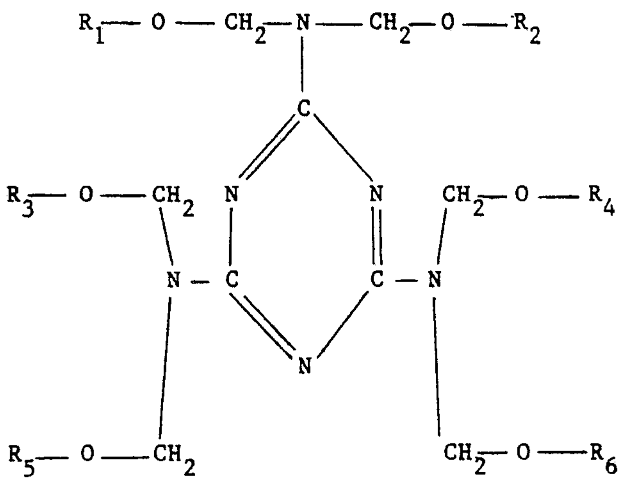

II

wherein $R_1$, $R_2$, $R_3$, $R_4$, $R_5$ and $R_6$ are the same or different alkyl radicals of 1 to 4 carbon atoms, the starting

materials being reacted in relative amounts to provide at least two phenolic hydroxyl groups per one alkoxy group.

The hexakis (alkoxy methyl) amino-triazines of formula (II) (hexaalkyl ethers of hexamethylol melamine) include compounds such as hexakis (methoxymethyl) amino-triazine, hexakis (ethoxymethyl) amino-triazine, hexakis (propoxymethyl) amino-triazine, hexakis (isopropoxymethyl) amino-triazine, hexakis (butoxymethyl) amino-triazin, hexakis (s-butoxymethyl) amino-triazine, hexakis (isobutoxy-methyl) amino-triazine and combinations thereof in any proportion.

The 2,2-bis(4-hydroxyphenyl)propane is reacted with the hexa-alkyl ethers of hexamethylol melamine in an amount to provide at least two phenolic hydroxyl groups per one alkoxy group. Preferably, the ratio of phenolic hydroxyl group to alkoxy groups is about 3:1. The reaction is preferably carried out at a temperature in the range of 100°C to 250°C, preferably 120°C to 200°C, (advantageously about 175°C) until the evolution of methanol ceases, e.g., for from 1.5 hours to 3 hours.

Although the reaction could be accelerated by an acidic catalyst, such as oxalic acid or paratoluenesulphonic acid, use of acidic catalysts is preferably avoided since the compounds of formula (I) are preferably used with alkaline curing catalysts such as the alkyl imidazoles or tris-dimethyl-aminomethylphenol for curing epoxy resins.

Suitable epoxy compounds which may be cured with the curing agents of the invention comprise those compounds containing on average more than one epoxy group per molecule, i.e., more than one

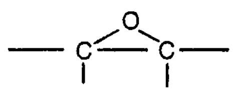

group per molecule. These epoxy compounds may be saturated or unsaturated aliphatic, cycloaliphatic, aromatic or heterocyclic, and may be substituted, if desired, with non-interfering substituents, such as halogen atoms, hydroxy groups and ether radicals. They may also be monomeric or polymeric. Preferred polyepoxides include the glycidyl polyethers of polyhydric phenols and polyhydric alcohols. As used herein the terms "epoxide equivalent weight" and "weight per epoxide" (WPE) refer to the average molecular weight of the polyepoxide molecule divided by the average number of epoxy groups present in the molecule.

Various examples of such epoxy compounds are given in US—A—3,477,990.

Preferred epoxy compounds are the glycidyl polyethers of polyhydric phenols and polyhydric alcohols, especially the glycidyl polyethers of 2,2-bis(4-hydroxyphenyl)propane having an average molecular weight between 300 and 3,000 and an epoxide equivalent weight (WPE) between 140 and 2,000. Especially preferred are the diglycidyl polyethers of 2,2-bis(4-hydroxyphenyl)propane having a WPE between 140 and 925 and an average molecular weight of from 300 to 1800.

Other suitable epoxy compounds include those compounds derived from polyhydric phenols and having at least one vicinal epoxy group wherein the carbon-to-carbon bonds within the six-membered ring are saturated. Examples of such epoxy compounds are described in US—A—3,336,241.

Preferred saturated epoxy compounds are the hydrogenated glycidyl ethers of 2,2-bis(4-hydroxyphenyl)propane, sometimes called the diglycidyl ethers of 2,2-bis(4-cyclohexanol)propane.

Other examples of suitable epoxy compounds include the glycidyl novolac resins, e.g. the glycidyl phenol-aldehyde condensates described in US—A—2,658,885.

The amount of amino-triazine derivative of formula (I) used for curing the epoxy compound will be as near as possible to a stoichiometric amount although up to a 100% excess of either the epoxy resin or the adduct may be employed.

Amino-triazine derivatives of formula (I) are especially suitable for use as crosslinking agents for epoxy resins in powder formulation, particularly in powder coating formulations, containing alkaline epoxy curing accelerators.

Accordingly, the present invention further provides a heat-curable composition in powder form comprising:

(a) at least one solid epoxy compound having on average more than one epoxy group per molecule,

(b) an amino-triazine derivative of formula (I) as described above and

(c) an alkaline epoxy curing acclerator, the amount of components a) and b) being selected within the range varying from stoichiometric to 100% excess of a) or b).

Preferably the epoxy compound comprises a glycidyl polyether of 2,2-bis(4-hydroxyphenyl)propane. The composition may advantageously include a glycidyl novolac resin.

Suitable curing accelerators include compounds such as known amine, amide and polyaminoamide accelerators. Very suitable curing accelerators include the imidazoles and benzimidazoles as well as their salts and adducts. Suitable such imidazole derivatives are disclosed in U.S. Patents Nos. 3,756,984, 3,329,652, 3,438,937, 3,356,645, 3,394,105, and 3;418,333. Imidazole compounds are the preferred curing accelerators, 2-methylimidazole being most preferred.

Other curing accelerators include the stannous salts of monocarboxylic acids having at least 2 carbon atoms, and more preferably from about 6 to 12 carbon atoms. Examples of operable stannous salts include, stannous caproate, stannous octoate, stannous laurate, stannous palmitate, stannous stearate, stannous oleate and stannous naphthenate. Stannous octoate is particularly preferred.

Other suitable curing accelerators include alkali metal salts such as lithium benzoate, lithium octoate, lithium naphthenate, lithium stearate and lithium neodecanoate.

Still other suitable but not preferred curing accelerators (catalysts) include the hydroxides of the alkaline earth and alkali metals, such as sodium hydroxide, potassium hydroxide and calcium hydroxide.

The amount of accelerator may vary within wide limits, e.g. from 0.01 to 10 parts by hundred by weight of polyepoxide (phr), and preferably from 0.05 to 5.0 phr.

Other materials may, of course, be blended or mixed in the heat-curable compositions, including plasticizers, stabilizers, extenders, resins, tars, pigments, reinforcing agents, thixotropic agents, flow control agents and/or antioxidants.

The amino-triazine derivatives of formula (I) may be utilized in epoxy resin compositions for use in many applications, such as for coatings and impregnating compositions in the preparation of adhesives for metals, wood or cement, and in preparation of reinforced composite products, such as laminated products, filament windings, sheet moulding compounds (SMC), electrical laminates, moulding powders, fluidized bed powders, and potting compounds, e.g. in the preparation of reinforced products and laminates wherein the compositions are applied to fibrous products such as glass fibres or sheets and the material formed into the desired object and cured.

The heat-curable compositions of the invention in powderform have advantageous application in powder coating. Accordingly the invention further provides a process for coating articles which comprises applying a heat-curable composition in powder form as defined above to a surface of an article and curing the coating by action of heat, conveniently at a temperature in the range of 200 to 250°C, and extends to articles when coated by this process.

The invention will be further understood from the following examples thereof, in which, unless otherwise indicated, parts and percentages, are parts and percentages by weight.

Polyepoxide A is a glycidyl polyether of 2,2-bis(4-hydroxyphenyl) propane having an epoxide equivalent weight (WPE) of 190—198.

Polyepoxide B is a polyglycidyl ether of 2,2-bis(4-hydroxyphenyl) propane having an epoxide equivalent weight of 850—950 and containing 0.5% by weight of flow control agent ("Modaflow II") (trade mark).

HMMM is hexamethoxymethyl-melamine ("CYMEL" Resin 303) (trade mark)

BPA is 2,2-bis(4-hydroxyphenyl)propane.

MEK is methyl ethyl ketone.

## Example 1

One mole of HMMM (390 grams) and nine moles (2052 grams) of BPA were heated to 138°C at which temperature methanol was evolved. The temperature was raised to 177°C over a 90 minute period and held at 177°C until evolution of methanol ceased (about 1—1/2 hours). The product was then poured out to yield a light coloured friable solid with a phenolic OH content of 0.66 eq/100 grams and a viscosity of 0.73 Pa.s (40% w/w. non-volatiles in MEK at 25°C.).

## Example II

The product of Example I was prepared an just before completion 128 grams of 2-methylimidazole were added and physically stirred in for 20 minutes before pouring out.

## Example III

A charge of 350 grams HMMM and 3150 grams BPA (corresponding to a 1 to 9 weight ratio, or a 1/15.4 molar ratio) were heated to 140°C at which point initial evolution of methanol was noted. The temperature was then raised to 177°C over a 2—1/2 hour period, and held at 177°C until methanol evolution ceased.

The resulting product was poured out into a tray to cool, yielding a light coloured friable solid with the following constants.

| | |
|---|---|
| Phenolic OH content: | 0.75 eq/100 grams. |
| Viscosity (ASTM D217076) 40% w/w. non-volatiles in MEK | $4.1 \times 10^{-3}$ Pa.s |

## Example IV

A catalyzed version of Example III was prepared by adding and stirring in 184 grams of 2-methylimidazole for 20 minutes after cessation of methanol evolution and before pouring out.

## Examples V, VI, VII, and VIII

The products of Examples I, II, III, and IV were formulated (dry blended) with epoxy compounds and other ingredients of curable compositions, in a "Welex" mixer (trade mark), extruded in a "BUSS PR—46" (trade mark) laboratory size extruder at a barrel temperature of 60C and each resulting composition was ground into a powder suitable for fluidized bed application.

It will be appreciated that the compositions of Examples I and III are the curing agent adducts of BPA and HMMM, whereas the compositions of Examples II and IV are the adducts of Examples I and III respectively wherein a catalytic amount of 2-methyl imidazole was physically blended therein.

The constitutions of the formulations in parts by weight are given in Table I, together with that of a commercial control composition.

"Polyepoxide C" is a solid epoxy resin with increased functionality which was prepared by reacting together 2600 grams of polyepoxide A, 798 grams of BPA (m.p. of 156—157°C) and 106 grams of a phenolic novolac resin with an average molecular weight (Mn) of 485 and a hydroxyl number in the range 570—600. These components were mixed together, heated to 115°C and 1.1 grams of a 50%W aqueous solution of tetramethyl ammonium chloride was added. The temperature was further raised to 160°C and allowed to exotherm to 168°C. The mixture was held at 168°C for 90 minutes and poured out to cool. The product was a solid friable resin ("polyepoxide C") with a WPE of 670, and a viscosity of $16\times10^{-3}$Pa.s as a 40% w/w non-volatiles solution in MeK.

"Polyepoxide D" is a commercial powder grade high molecular weight polyfunctional epoxy novolac resin of epoxide equivalent weight 750 to 850.

"Phenolic terminated resin, commercial control" is a phenolic-OH terminated adduct formed by reaction of two equivalents of BPA with an epoxy compound similar to polyepoxide A, containing 2.5% w of a flow control agent.

The powders shown in Table I were applied via fluidized bed to cold rolled steel panels at 232°C and postcured. One set of panels was postcured for 90 seconds before quenching, and a second set for 120 seconds before quenching. The gel times, physical properties and cathodic disbonding results are shown in Table II.

The data in Table II shows that the BPA/HMMM cured systems are all more solvent resistant than a commercial control composition, while Examples V and VI are superior in flexibility. In resistance to cathodic disbonding the BPA/HMMM cured systems are, on balance, equal to the control composition.

TABLE I

| | EXAMPLE V | EXAMPLE VI | EXAMPLE VII | EXAMPLE VIII | Commercial Control |
|---|---|---|---|---|---|
| Polyepoxide B | 1,211 | 1,177 | — | — | — |
| Polyepoxide C | — | — | 1,131 | 1,141 | — |
| Polyepoxide D | — | — | — | — | 1,052 |
| Phenolic Terminated Resin, Example I | 36 | 69 | 95 | — | — |
| Phenolic Terminated Resin, Example II | 129 | 139 | — | — | — |
| Phenolic Terminated Resin, Example III | — | — | 11 | 96 | — |
| Phenolic Terminated Resin, Example IV | — | — | 128 | 128 | — |
| Phenolic Terminated Resin, Commercial Control | — | — | — | — | 324 |
| Barytes # 1 | 550 | 550 | 550 | 550 | 550 |
| Mica 4X | 183 | 183 | 183 | 183 | 183 |
| Red Iron Oxide | 30 | 30 | 30 | 30 | 30 |
| "Cabosil M5" (trade mark) (colloidal silica) | 11 | 11 | 11 | 11 | — |
| "Modaflow II" (trade mark) (flow control agent) | — | — | 11 | 11 | 11 |
| | 2,150 | 2,150 | 2,150 | 2,150 | 2,150 |

TABLE II

Experimental System vs Commercial Control

| | COMMERCIAL CONTROL | EXAMPLE V | EXAMPLE IV | EXAMPLE VII | EXAMPLE VIII |
|---|---|---|---|---|---|
| Gel Time at 204°C Seconds | 17.1 | 16.4 | 16.9 | 13.6 | 17.0 |
| Pencil Hardness[1] | | | | | |
| Cured 90 sec/232°C | F | F | F | HB | HB |
| Cured 120 sec/232°C | F | F | F | HB | HB |
| Solvent (MIBK) Resistance Minutes | | | | | |
| Cured 90 sec/232°C | 15—20 | >30 | >30 | >30 | >30 |
| Cured 120 sec/232°C | 20—25 | >30 | >30 | >30 | >30 |
| Flexibility[2] In Degrees Per Pipe Diameter Bend | | | | | |
| Cured 90 Sec/232°C | 6.1 | 10.9 | 10.7 | 5.4 | 3.8 |
| Cured 120 Sec/232°C | 5.6 | 8.8 | 6.5 | 6.8 | 5.5 |
| Cathodic Disbanding[3] Diameter of Disbonded Area In MM | | | | | |
| 48 Hrs at 60°C | 1.6 | 2.4 | 1.9 | 2.8 | 2.4 |
| 30 Days at 25°C | 3.2 | 2.8 | 4.4 | 2.0 | 4.0 |

(1) Scratch hardness as defined in ASTM D3363—74.
(2) Using a "Bell" tester (a hydraulic bending device) the test was performed at 0°C, a higher number indicated better flexibility
(3) Cell type, platinum wire electrode, 6 volts, 3% NaCl electrolyte.

**Claims**

1. An amino-triazine derivative, suitable as a curing agent for epoxy resins, having the general formula (I)

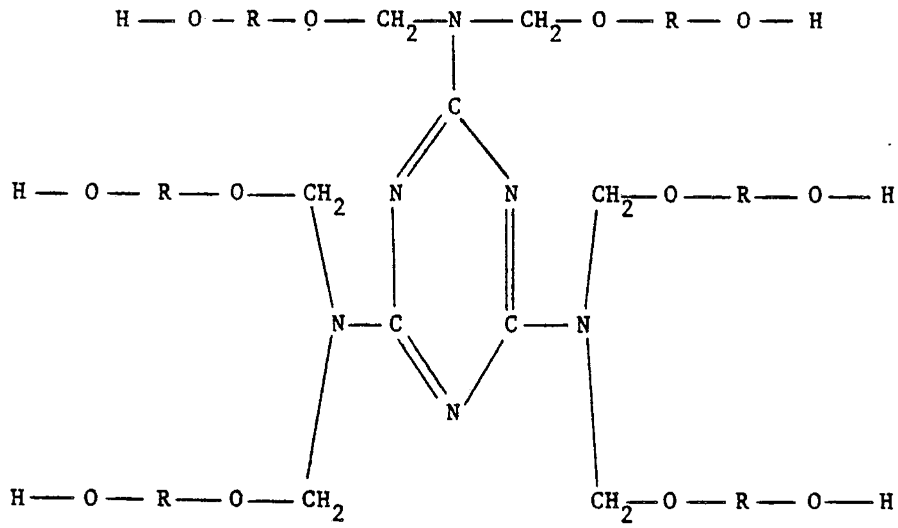

I

wherein R represents the residue

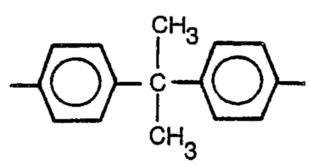

2. A process for preparing an amino-triazine derivate of formula (I) as defined in claim 1, which comprises reacting 2.2-bis(4-hydroxyphenyl)propan with an amino-triazine having the general formula (II)

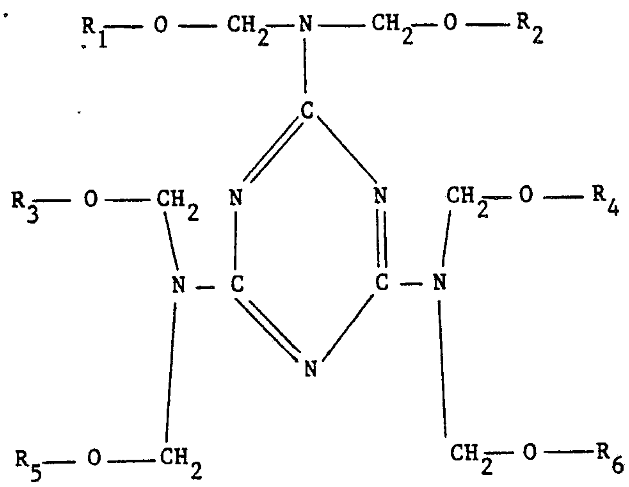

II

wherein $R_1$, $R_2$, $R_3$, $R_4$, $R_5$ and $R_6$ are the same or different alkyl radicals of 1 to 4 carbon atoms, the starting materials being reacted in relative amounts to provide at least two phenolic hydroxyl groups per one alkoxy group.

3. A process according to claim 2 wherein the amino-triazine of formula (II) is hexamethoxymethylmelamine.

4. A process according to claim 2 or 3 wherein the 2.2-bis(4-hydroxyphenyl)propan and the amino-triazine are reacted at a temperature in the range of 120°C to 200°C until evolution of alkanol ceases.

5. A heat-curable composition in powder form comprising:

(a) at least one solid epoxy compound having on average more than one epoxy group per molecule,

(b) an amino-triazine derivative of formula (I) as defined in claim 1, and

(c) an alkaline epoxy curing accelerator,

the amount of components a) and b) being selected within the range varying from stoichiometric to 100% excess of a) or b).

6. A composition according to claim 5 wherein the epoxy compound comprises a glycidyl polyether of 2,2-bis(4-hydroxyphenyl)propane.

7. A composition according to claim 5 or 6 which includes a glycidyl novolac resin.

8. A composition according to claim 5, 6 or 7 wherein the epoxy curing accelerator is an imidazole compound.

**Patentansprüche**

1. Aminotriazin-derivat, das geeignet ist als Härtnungsmittel für Epoxyharze und die allgemeine Formel (I)

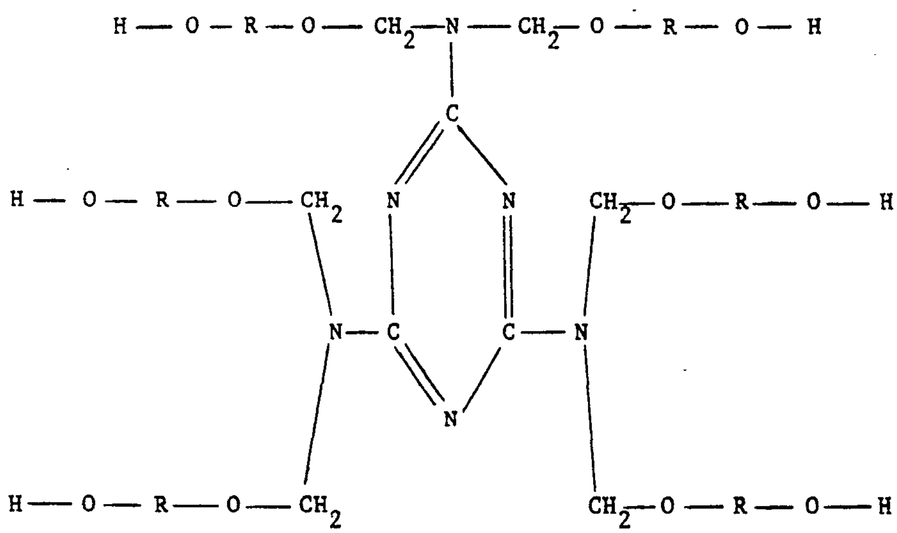

I

besitzt, in der R den Rest

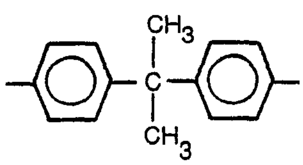

bedeutet.

2. Verfahren zur Herstellung eines Aminotriazin-derivats der Formel (I), wie in Anspruch 1 angegeben, umfassend die Umsetzung von 2,2-Bis-(4-hydroxyphenyl)-propan mit einem Aminotriazin der allgemeinen Formel (II)

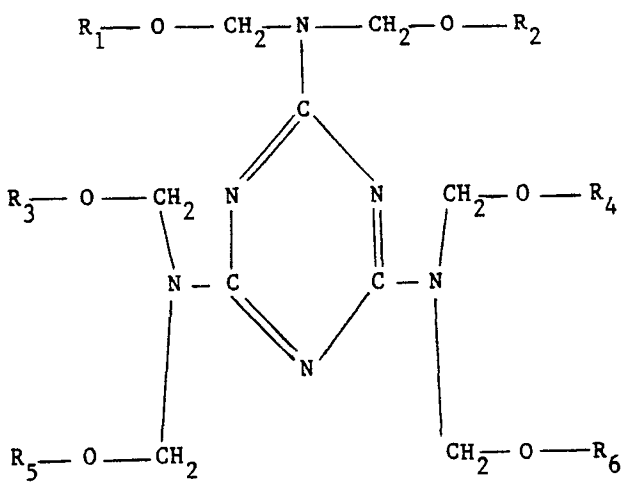

II

in der $R_1$, $R_2$, $R_3$, $R_4$, $R_5$ und $R_6$ gleiche oder unterschiedliche Alkylreste mit 1 bis 4 Kohlenstoffatomen bedeuten, wobei die Ausgangsmaterialien in solchen relativen Mengen umgesetzt werden, daß sie mindestens zwei phenolische Hydroxylgruppen pro eine Alkoxygruppe ergeben.

3. Verfahren nach Anspruch 2, wobei das Aminotriazin der Formel (II) Hexamethoxymethyl-melamin ist.

4. Verfahren nach Anspruch 2 oder 3, wobei das 2,2-Bis-(4-hydroxyphenyl)-propan und das Aminotriazin bei einer Temperatur im Bereich von 120°C bis 200°C umgesetzt werden, bis die Alkanol-Entwicklung aufhört.

5. Wärme-härtbase Masse in Pulverform, umfassend

(a) mindestens eine feste Epoxyverbindung mit im Mittel mehr als einer Epoxygruppe pro Molekül,

(b) ein Aminotriazin-derivat der Formel (I), wie in Anspruch 1 definiert, und

(c) einen alkalischen Epoxy-Härtungsbeschleuniger,

wobei die Menge der Komponenten (a) und (b) innerhalb eines Bereiches von der stöchiometrischen Menge bis zu einem 100%-igen Überschuß von (a) oder (b) gewählt wird.

6. Masse nach Anspruch 5, wobei die Epoxyverbindung einen Glycidylpolyether von 2,2-Bis(4-hydroxyphenyl)-propan umfaßt.

7. Masse nach Anspruch 5 oder 6, umfassend ein Glycidyl-Novolak-harz.

8. Masse nach Anspruch 5, 6 oder 7, wobei der Epoxyhärtungsbeschleuniger eine Imidazol-Verbindung ist.

**Revendications**

1. Dérivé d'aminotriazine, convenant comme durcisseur pour les résines époxydes, ayant une formule générale (I)

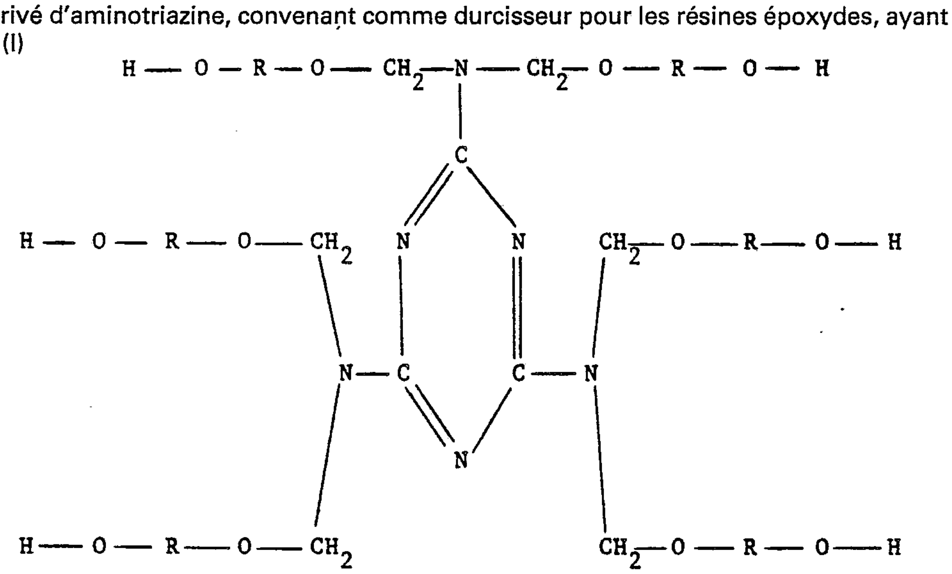

I

dans laquelle R représente le groupement

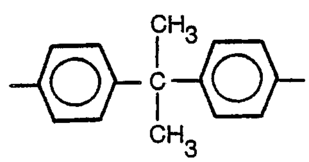

2. Procédé pour préparer un dérivé d'aminotriazine de formule (I) selon la revendication 1, qui comprend la réaction de 2,2-bis(4-hydroxyphényl)propane avec une aminotriazine ayant pour formule générale (II)

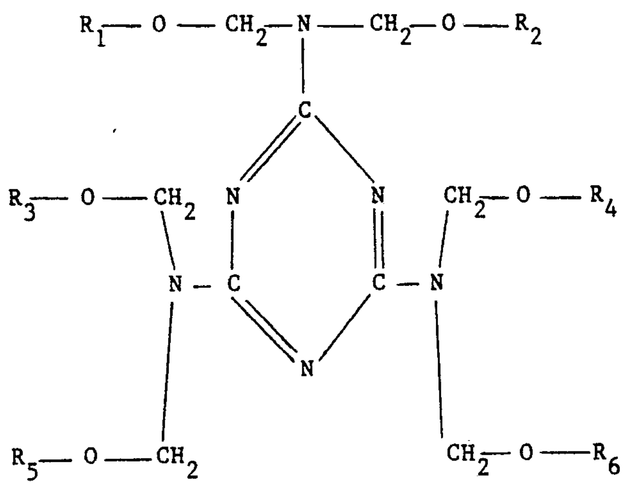

II

dans laquelle $R_1$, $R_2$, $R_3$, $R_4$, $R_5$ et $R_6$ sont des radicaux alkyle identiques ou différents ayant 1 à 4 atomes de carbone, les matières de départ étant mises en réaction en quantitiés relatives pour fournir au moins deux groupes hydroxyle phénoliques par groupe alcoxy.

3. Procédé selon la revendication 2, dans lequel l'aminotriazine de formule (II) est l'hexaméthoxyméthylmélamine.

4. Procédé selon la revendication 2 ou 3, dans lequel on fait réagir le 2,2-bis(4-hydroxyphényl)propane et l'aminotriazine à une température dans l'intervalle de 120°C à 200°C jusqu'à ce que le dégagement d'alcanol cesse.

5. Composition thermodurcissable sous forme d'une poudre comprenant:

(a) au moins un composé époxydé solide ayant en moyenne plus d'un groupe époxy par molécule,

(b) un dérivé d'aminotriazine de formule (I) selon la revendication 1, et

(c) un accélérateur de durcissement d'époxyde alcalin,

la quantité des constituants a) et b) étant choisie dans l'intervalle allant de la stoechiométrie à un excès de 100% de a) ou b).

6. Composition selon la revendication 5, dans laquelle le composé époxydé comprend un polyéther glycidylique de 2,2-bis(4-hydroxyphényl)propane.

7. Composition selon la revendication 5 ou 6, qui contient une résine Novolaque glycidylique.

8. Composition selon la revendication 5, 6 ou 7, dans laquelle l'accélérateur de durcissement d'époxyde est un composé d'imidazole.